# FASCICULE DE BREVET EUROPEEN

(11) **EP 2 794 340 B1**
(45) Date de publication et mention de la délivrance du brevet: **23.06.2021**
(21) Numéro de dépôt: 12806603.2
(22) Date de dépôt: 30.11.2012
(51) Int. Cl.: H02H 9/00, H02M 1/36, H02J 7/00, B60L 7/14, B60L 50/16

(54) **DISPOSITIF DE CONNEXION/DECONNEXION DE CHARGE POUR UNITE DE STOCKAGE D'ENERGIE DANS UN VEHICULE AUTOMOBILE**
VORRICHTUNG ZUM VERBINDEN/LÖSEN EINER LADUNG FÜR EINE ENERGIESPEICHEREINHEIT IN EINEM KRAFTFAHRZEUG
DEVICE FOR CONNECTING/DISCONNECTING A LOAD FOR ENERGY STORAGE UNIT IN AN AUTOMOTIVE VEHICLE

(30) Priorité: 19.12.2011 FR 1161889
(43) Date de publication de la demande: 29.10.2014
(73) Titulaire: Valeo Equipements Electriques Moteur, 94046 Créteil Cedex (FR)
(72) Inventeur: CHEMIN, Michaël, F-94510 La Queue En Brie (FR); LECOCQ, Yann, F-94370 Sucy en Brie (FR)
(86) Numéro de dépôt international: PCT/FR2012/052760
(87) Numéro de publication internationale: WO 2013/093273

(56) Documents cités:
- EP-A2- 1 909 303
- EP-A2- 2 368 749
- WO-A1-01/61818
- WO-A1-2010/095641
- US-A1- 2007 108 959

## Description

La présente invention concerne de manière générale un dispositif de connexion/déconnexion de charge pour une unité de stockage d'énergie électrique dans un véhicule automobile. Plus particulièrement, l'invention concerne un dispositif du type ci-dessus dans lequel sont prévus des moyens destinés à limiter le courant délivré par l'unité de stockage d'énergie électrique lorsqu'une charge, par exemple de type capacitive, est connectée à celle-ci.

Les considérations très actuelles d'économie d'énergie et de réduction de la pollution conduisent les constructeurs automobiles à aller dans la voie de l'électrification des véhicules. Des véhicules tout électriques et des véhicules à bas CO₂ de types « mild-hybrid » et « full-hybrid » (en terminologie anglaise) sont ainsi proposés aux automobilistes. Ces technologies «mild-hybrid» et «full-hybrid» correspondent à différents niveaux d'intégration des moyens électriques dans la propulsion des véhicules.

Les applications « mild-hybrid » intègrent généralement des moteurs électriques de l'ordre de 8 à 20 kW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance notamment lors des reprises. De plus, une traction à faible vitesse, par exemple en environnement urbain, peut également être assurée par ce même moteur électrique. Les applications de type « full-hybrid» intègrent généralement des moteurs de 30 à 50 kW pour des architectures de type série et/ou parallèle avec un niveau d'intégration plus abouti du ou des moteurs électriques dans la chaîne de traction du véhicule.

Dans ces véhicules électrifiés, les constructeurs automobiles font fréquemment le choix d'y inclure des batteries de stockage d'énergie électrique, par exemple de type lithium-ion, pouvant fonctionner à des tensions élevées, de quelques dizaines à quelques centaines de volts. Ces tensions élevées accentuent la nécessité de dispositifs de connexion/déconnexion de charge, d'une part, pour isoler la batterie haute tension du reste du véhicule notamment lorsque celui-ci est à l'arrêt ou lors d'une opération de service après-vente et, d'autre part, pour assurer une limitation du courant de décharge de la batterie par exemple lors de la connexion d'une charge de type capacitive. Ces dispositifs de connexion/déconnexion de charge apportent ainsi davantage de sécurité pour les personnes et permettent de prolonger la durée de vie de la batterie et des équipements qui y sont connectés, en assurant une limitation du courant maximum que pourra fournir la batterie.

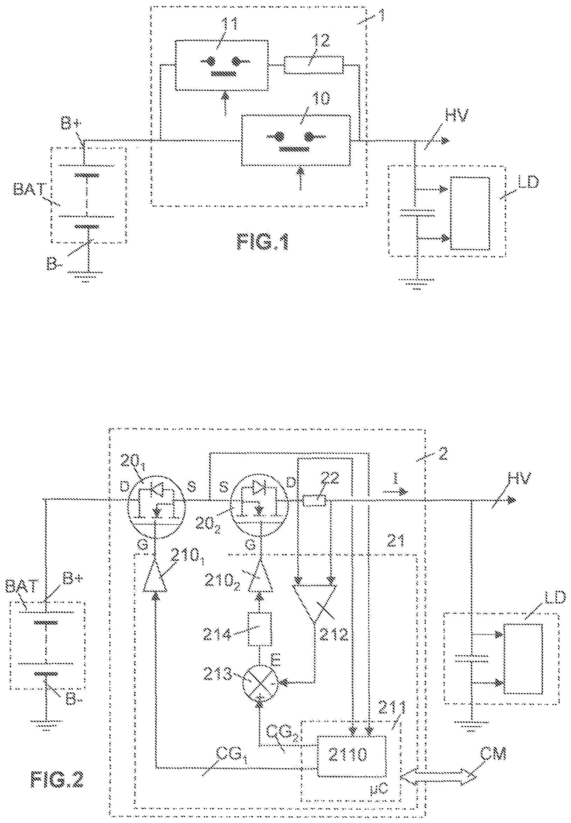

La topologie standard connue dans l'état de la technique pour les dispositifs de connexion/déconnexion de charge dans un véhicule de type mild ou full-hybrid est celle représentée à la Fig.1 ci-annexée.

Comme montré à la Fig.1, un dispositif de connexion/déconnexion de charge 1 est monté entre une borne positive B+ d'une batterie BAT et un réseau électrique de bord HV du véhicule. Une borne B- de la batterie BAT est reliée à la masse du réseau HV. Le réseau électrique HV est ici un réseau secondaire du véhicule, dit réseau de haute tension, sachant que le véhicule sera généralement équipé aussi du réseau de tension continue classique, de 12 V, non représenté. A la Fig.1, il est représenté une charge capacitive LD reliée au réseau HV.

Dans l'état de la technique, le dispositif de connexion/déconnexion de charge 1 est réalisé à l'aide de contacteurs électromécaniques.

Comme montré à la Fig.1, le dispositif 1 comprend un contacteur principal 10, un contacteur auxiliaire 11 et une résistance de limitation de courant 12.

Un contact électrique de puissance du contacteur 10 est monté en série entre la borne B+ de la batterie BAT et le réseau HV. En montage parallèle avec le contact électrique de puissance du contacteur 10, le dispositif 1 comporte une branche de dérivation formée d'un contact électrique du contacteur auxiliaire 11 en série avec la résistance de limitation de courant 12. La branche de dérivation est également raccordée entre la borne B+ et le réseau HV.

Typiquement, le contacteur principal 10 est un contacteur de puissance capable de supporter des courants continus élevés de l'ordre de plusieurs centaines d'ampères, par exemple 300 A. Outre la fonction de connexion/déconnexion de la batterie BAT au réseau HV, le contacteur 10 remplit également une fonction de disjoncteur de sécurité en cas d'incident sur le réseau HV, comme par exemple un court-circuit.

Le contacteur auxiliaire 11 et la résistance 12 permettent une pré-charge de la charge capacitive LD avec un courant qui est limité à une intensité maximale prédéterminée. La charge capacitive LD est par exemple constituée par un convertisseur de puissance réversible de courant alternatif-continu (AC/DC) qui est connecté à une machine électrique tournante. Dans un tel cas, la composante capacitive du convertisseur AC/DC provient des condensateurs de filtrage de forte capacité inclus dans le convertisseur. Typiquement la machine électrique fonctionne en moteur de traction ou en génératrice de freinage récupératif.

Pour la pré-charge électrique de la charge LD, un circuit de commande (non représenté) commande d'abord la fermeture du contacteur auxiliaire 11 pendant une durée prédéterminée avant de commander son ouverture et la fermeture du contacteur principal 10. Ainsi, pendant le laps de temps où le contacteur auxiliaire 11 est fermé, la charge LD est alimentée avec un courant limité qui permet une mise en tension de sa composante capacitive, de sorte qu'à la fermeture du contacteur principal 10 aucun appel important de courant de pic ne se produit sur la batterie BAT. Les contacteurs principal 10 et auxiliaire 11 sont commandés typiquement par une unité électronique de commande (ECU) du véhicule.

Bien que le dispositif de connexion/déconnexion de charge de la technique antérieure décrit ci-dessus donne globalement satisfaction sur le plan fonctionnel, il présente cependant plusieurs inconvénients en termes d'encombrement, de fiabilité et de coût. On notera typiquement un encombrement de 110x75x65 mm pour un contacteur de 400 V- 300 A et une fiabilité limitée, de l'ordre de quelques dizaines de cycles seulement à fort courant.

Le document WO2010095641 divulgue un dispositif de connexion/ déconnexion de charge selon le préambule de la revendication 1.

Il est donc souhaitable de proposer des solutions nouvelles autorisant une conception plus compacte et fiable des dispositifs de connexion/déconnexion de charge, tout en réduisant leur coût.

Selon un premier aspect, la présente invention concerne un dispositif de connexion/déconnexion de charge pour équiper une unité de stockage d'énergie électrique dans un véhicule automobile comprenant un premier interrupteur apte à connecter directement la charge à l'unité de stockage d'énergie électrique et un second interrupteur apte à connecter la charge à l'unité de stockage d'énergie électrique avec un effet de limitation du courant électrique pouvant circuler entre l'unité de stockage d'énergie électrique et la charge.

Conformément à l'invention, le second interrupteur comporte un transistor commandé en régime linéaire pendant une temporisation de durée prédéterminée et le dispositif comprend un circuit de commande muni d'une boucle d'asservissement de courant pour la commande en régime linéaire du transistor du second interrupteur.

Selon d'autres caractéristiques particulières de l'invention:
- Le courant électrique pouvant circuler entre l'unité de stockage d'énergie électrique et la charge est commandé par une consigne fournie en entrée à la boucle d'asservissement.
- Le premier interrupteur comporte un transistor commandé en régime de commutation dit tout-ou-rien.

Selon une autre forme de réalisation de l'invention, le second interrupteur comporte une pluralité de transistors montés en parallèle, chacun des transistors étant commandé en régime linéaire pendant la temporisation de durée prédéterminée.

Selon d'autres caractéristiques particulières de la forme de réalisation ci-dessus :
- Le dispositif comprend un circuit de commande muni d'une boucle d'asservissement de courant pour la commande en régime linéaire d'au moins un transistor de ladite pluralité de transistors montés en parallèle du second interrupteur.
- Le premier interrupteur comporte une pluralité de transistors montés en parallèle, chacun des transistors étant commandé en régime de commutation dit tout-ou-rien.

Selon encore une autre caractéristique particulière de l'invention, les transistors sont de type MOSFET.

Selon un autre aspect, l'invention concerne également un réseau électrique de bord dans un véhicule, le réseau dans lequel est prévu un dispositif de connexion/déconnexion de charge tel que décrit brièvement ci-dessus pour équiper une unité de stockage d'énergie électrique du véhicule.

L'invention est maintenant décrite au travers de différents exemples de réalisation, en référence aux dessins ci-annexés. Il est à noter que ces dessins n'ont d'autre but que d'illustrer le texte de la description et ne constituent en aucune sorte une limitation de la portée de l'invention :
- La Fig.1 montre le schéma électrique de principe d'un dispositif de connexion/déconnexion de charge selon la technique antérieure;
- La Fig.2 montre une forme de réalisation particulière d'un dispositif de connexion/déconnexion de charge selon la présente invention; et
- La Fig.3 montre un circuit inclus dans une autre forme de réalisation de l'invention et comprenant plusieurs transistors montés en parallèle et équipés de boucles d'asservissement de courant.

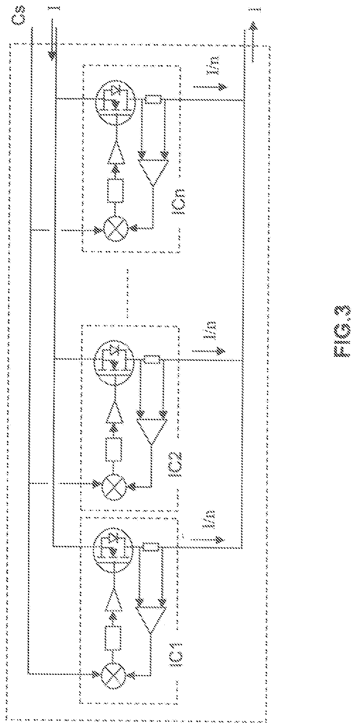

En référence aux Figs.2 et 3, il est maintenant décrit plusieurs formes de réalisation d'un dispositif de connexion/déconnexion de charge 2 selon l'invention.

Comme montré à la Fig.2, le dispositif de connexion/déconnexion de charge 2 selon l'invention se monte dans le circuit électrique en lieu est place du dispositif 1 de la technique antérieure.

Le dispositif 2 comprend essentiellement ici deux interrupteurs électroniques 20₁ et 20₂ sous la forme de deux transistors de puissance de type MOSFET canal N, un circuit de commande 21 et un shunt résistif 22. On notera que d'autres types de transistors pourront être utilisés, selon les applications de l'invention.

Comme montré à la Fig.2, les transistors 20₁ et 20₂ sont montés tête-bêche, avec les diodes intrinsèques ayant des sens de montage opposés, de manière à réaliser une fonction d'interrupteur bidirectionnel.

Le transistor 20₁ comprend une électrode de drain D reliée à une borne B+ de la batterie BAT et une électrode de source S reliée à l'électrode de source S du transistor 20₂. L'électrode de drain D du transistor 20₂ est reliée au réseau haute tension HV à travers le shunt résistif 22 qui est donc traversé par un courant de puissance I traversant le dispositif 2.

Des électrodes de grille G des transistors 20₁ et 20₂ sont reliées à des sorties de commande du circuit de commande 21.

Le transistor 20₁ est commandé directement par un microcontrôleur (µC) 211 inclus dans le circuit de commande 21, à travers un signal de commande CG₁ fourni par celui-ci. Un amplificateur d'attaque 210₁, dit « driver » en terminologie anglaise, permet d'adapter le signal de commande CG₁ pour une application de celui-ci à la grille G du transistor 20₁. Le transistor 20₁ fonctionne en régime de commutation, c'est-à-dire, dans un état de saturation (circuit électrique fermé) ou un état de blocage (circuit électrique ouvert).

Le transistor 20₂ est commandé par le microcontrôleur (µC) 211 à travers une boucle d'asservissement de courant. Cette boucle d'asservissement comporte essentiellement un amplificateur différentiel 212, un amplificateur soustracteur 213 et un correcteur 214. Le transistor 20₂ peut fonctionner selon deux régimes, à savoir, un régime de commutation, comme le transistor 20₂, ou un régime linéaire.

L'amplificateur différentiel 212 prélève aux bornes du shunt résistif 22 une information de tension représentative du courant I réel traversant les transistors 20₁ et 20₂ montés en série.

L'information du courant I réel est une information de contre-réaction qui est appliquée à une entrée - du soustracteur 213. Une entrée + du soustracteur 213 reçoit une consigne de courant sous la forme d'un signal de commande CG₂ fourni par le microcontrôleur (µC) 211. Le transistor 20₂ est commandé par un signal d'erreur E entre la consigne de courant CG₂ et le courant I réel. Le signal d'erreur E est appliqué à la grille G du transistor 20₂ à travers le correcteur 214 et l'amplificateur d'attaque 210₂. Typiquement, le correcteur 214 est de type proportionnel-intégral (PI).

Dans cette forme de réalisation, le microcontrôleur (µC) 211 comporte un module logiciel 2110 qui définit la consigne CG₂ pour le transistor 20₂ et le signal de commande CG₁ pour le transistor 20₁ en fonction de commandes CM fournies au dispositif 2. Les commandes CM sont fournies par une unité électronique de commande (ECU) de véhicule (non représentée), par exemple à travers un bus de communication de type CAN du véhicule. Les tensions de drain (D) et de source (S) du transistor 20₂ peuvent aussi être fournies au microcontrôleur 211 et être utilisées pour connaître les états des transistors.

La fonction principale de connexion/déconnexion de charge en tout-ou-rien est effectuée par le dispositif 2 à travers une commande simultanée des deux transistors 20₁ et 20₂ en régime de commutation. Les signaux CG1 et CG2 sont alors mis à des niveaux de tension tels que les transistors 20₁ et 20₂ sont soit saturées, soit bloqués.

En connexion, la commutation en tout-ou-rien est adaptée lorsque la charge est peu ou pas capacitive. Les transistors 20₁ et 20₂ sont alors commandés en saturation pour fermer le circuit électrique dès que l'ordre de connexion est reçu par le circuit de commande 211. En déconnexion, la commutation en tout-ou-rien s'applique dans les deux cas, à savoir, aussi bien avec une charge capacitive qu'avec une charge non-capacitive.

La fonction de pré-charge en courant à la connexion, pour une charge capacitive, est assurée à travers une commande en saturation du transistor 20₁, une commande en régime linéaire du transistor 20₂ et finalement une commande en saturation du transistor 20₂. La commande en saturation du transistor 20₁ intervient dès le début de l'ordre de connexion et reste établie pour toute la durée de celle-ci. La commande en régime linéaire du transistor 20₂ est établie pendant une temporisation de durée prédéterminée Dpc à compter du début de l'ordre de connexion. Une fois la temporisation Dpc écoulée, le transistor 20₂ est commandé en saturation pour toute la durée restante de la connexion.

Le fonctionnement du transistor 20₂ en régime linéaire pendant la pré-charge autorise un contrôle du courant I fourni par la batterie BAT. L'intensité du courant I peut être réglée par le microcontrôleur 211 à travers la consigne CG₂. La charge capacitive LD est ainsi chargée avec un courant dont l'intensité est maîtrisée et réglée afin d'éviter toute détérioration de la batterie et des composants électroniques.

On notera ici que la Fig.2 montre un schéma électrique de principe et que différentes formes de réalisation de l'invention sont possibles.

Ainsi, par exemple, on notera que dans certaines applications de l'invention, le transistor 20₁ pourra lui aussi être équipé d'une boucle de régulation analogue à celle équipant le transistor 20₂ à la Fig.2. Dans ce cas là, les deux transistors 20₁ et 20₂ pourront fonctionner en régime linéaire, ce qui permettra de contrôler en limitation le courant dans l'autre sens, par exemple, pour charger la batterie BAT lorsqu'une tension du réseau HV est supérieure à celle de la batterie.

De plus, les transistors 20₁ et 20₂ pourront être remplacés par plusieurs transistors en parallèle afin de pouvoir passer des courants plus importants.

La Fig.3 montre un montage parallèle de n interrupteurs de commutation ICI à ICn comportant chacun un transistor MOSFET et une boucle de régulation de courant analogue à celle de la Fig.2. Un tel montage est applicable pour remplacer l'unique transistor 20₂ du circuit de la Fig.2 dans un dispositif 2 devant supporter un courant important. Chaque interrupteur ICn passe alors un courant I/n et reçoit une consigne Cs correspondante.

On notera également que dans certaines applications de l'invention, le montage en parallèle de plusieurs transistors pourra comprendre des transistors équipés chacun d'une boucle d'asservissement et d'autres transistors en commande directe, en état de saturation ou pas.

Bien entendu, différentes autres variantes de l'invention pourront être réalisées par l'homme du métier instruit par les enseignements qui lui sont apportés ici.

## Revendications

1. Dispositif de connexion/déconnexion de charge (2) pour équiper une unité de stockage d'énergie électrique (BAT) dans un véhicule automobile comprenant un premier interrupteur (20₁) apte à connecter directement la charge (LD) à l'unité de stockage d'énergie électrique (BAT) et un second interrupteur (20₂) apte à connecter la charge (LD) à l'unité de stockage d'énergie électrique (BAT) avec un effet de limitation du courant électrique (I) pouvant circuler entre l'unité de stockage d'énergie électrique (BAT) et la charge (LD), **caractérisé en ce que** le second interrupteur comporte un transistor (20₂) commandé en régime linéaire pendant une temporisation (Dpc) de durée prédéterminée et le dispositif comprend un circuit de commande (21) muni d'une boucle d'asservissement de courant (22, 212, 213, 214) pour la commande en régime linéaire du transistor (20₂) du second interrupteur, ledit courant électrique (I) pouvant circuler entre l'unité de stockage d'énergie électrique (BAT) et la charge (LD) est commandé par une consigne (CG₂, Cs) fournie en entrée à la boucle d'asservissement (22, 212, 213, 214).

2. Dispositif selon la revendication 1, **caractérisé en ce que** le premier interrupteur comporte un transistor (20₁) commandé en régime de commutation dit tout-ou-rien.

3. Dispositif selon la revendication 1, **caractérisé en ce que** le second interrupteur comporte une pluralité (n) de transistors (IC1, IC2, ... ICn) montés en parallèle, chacun des transistors étant commandé en régime linéaire pendant la temporisation de durée prédéterminée (Dpc).

4. Dispositif selon la revendication 3, **caractérisé en ce qu'**il comprend un circuit de commande muni d'une boucle d'asservissement de courant (IC1, IC2, ... ICn) pour la commande en régime linéaire d'au moins un transistor de ladite pluralité de transistors montés en parallèle du second interrupteur.

5. Dispositif selon la revendication 4, **caractérisé en ce que** le courant électrique pouvant circuler entre l'unité de stockage d'énergie électrique (BAT) et la charge (LD) est commandé par une consigne (Cs) fournie en entrée de la boucle d'asservissement de courant.

6. Dispositif selon la revendication 1 ou 3, **caractérisé en ce que** le premier interrupteur comporte une pluralité (n) de transistors montés en parallèle, chacun des transistors étant commandé en régime de commutation dit tout-ou-rien.

7. Dispositif selon l'une quelconque des revendications 1 à 6, **caractérisé en ce que** le ou les transistors sont de type MOSFET.

8. Réseau électrique de bord dans un véhicule, **caractérisé en ce qu'**il comprend un dispositif de connexion/déconnexion de charge selon l'une quelconque des revendications 1 à 7, le dispositif équipant une unité de stockage d'énergie électrique du véhicule.

## Patentansprüche

1. Vorrichtung zum Verbinden/Lösen einer Ladung (2) für die Ausstattung einer elektrischen Energiespeichereinheit (BAT) in einem Kraftfahrzeug, umfassend einen ersten Schalter (20₁), der fähig ist, die Ladung (LD) direkt mit der elektrischen Energiespeichereinheit (BAT) zu verbinden, und einen zweiten Schalter (20₂), der fähig ist, die Ladung (LD) mit Wirkung einer Begrenzung des elektrischen Stroms (I), der zwischen der elektrischen Energiespeichereinheit (BAT) und der Ladung (LD) fließen kann, mit der Energiespeichereinheit (BAT) zu verbinden, **dadurch gekennzeichnet, dass** der zweite Schalter einen Transistor (20₂) umfasst, der während einer Verzögerung (Dpc) einer vorgegebenen Dauer linear gesteuert wird, und die Vorrichtung einen Steuerschaltkreis (21) umfasst, der mit einem Stromregelkreis (22, 212, 213, 214) zur linearen Steuerung des Transistors (20₂) des zweiten Schalters versehen ist, wobei der elektrische Strom (I), der zwischen der elektrischen Energiespeichereinheit (BAT) und der Ladung (LD) fließen kann, durch einen Sollwert (CG₂, Cs) gesteuert wird, der am Eingang des Regelkreises (22, 212, 213, 214) bereitgestellt wird.

2. Vorrichtung nach Anspruch 1, **dadurch gekennzeichnet, dass** der erste Schalter einen Transistor (20₁) umfasst, der ein-/ausschaltgesteuert wird.

3. Vorrichtung nach Anspruch 1, **dadurch gekennzeichnet, dass** der zweite Schalter eine Vielzahl (n) parallel geschalteter Transistoren (IC1, IC2, ... ICn) umfasst, wobei jeder der Transistoren während der Verzögerung einer vorgegebenen Dauer (Dpc) linear gesteuert wird.

4. Vorrichtung nach Anspruch 3, **dadurch gekennzeichnet, dass** sie einen Steuerschaltkreis umfasst, der mit einem Stromregelkreis (IC1, IC2, ... ICn) zur linearen Steuerung mindestens eines Transistors aus der Vielzahl parallel geschalteter Transistoren des zweiten Schalters versehen ist.

5. Vorrichtung nach Anspruch 4, **dadurch gekennzeichnet, dass** der elektrische Strom, der zwischen der elektrischen Energiespeichereinheit (BAT) und der Ladung (LD) fließen kann, durch einen Sollwert (Cs) gesteuert wird, der am Eingang des Regelkreises bereitgestellt wird.

6. Vorrichtung nach Anspruch 1 oder 3, **dadurch gekennzeichnet, dass** der erste Schalter eine Vielzahl (n) parallel geschalteter Transistoren umfasst, wobei jeder der Transistoren ein-/ausschaltgesteuert wird.

7. Vorrichtung nach einem der Ansprüche 1 bis 6, **dadurch gekennzeichnet, dass** der oder die Transistoren vom Typ MOSFET sind.

8. Elektrisches Netz an Bord eines Fahrzeugs, **dadurch gekennzeichnet, dass** es eine Vorrichtung zum Verbinden/Lösen einer Ladung nach einem der Ansprüche 1 bis 7 umfasst, wobei die Vorrichtung eine elektrische Energiespeichereinheit ausstattet.

## Claims

1. Load connection/disconnection device (2) to be fitted to an electrical energy storage unit (BAT) in a motor vehicle, comprising a first switch (20₁) able to connect the load (LD) directly to the electrical energy storage unit (BAT) and a second switch (20₂) able to connect the load (LD) to the electrical energy storage unit (BAT) with a limiting effect on the electrical current (I) able to flow between the electrical energy storage unit (BAT) and the load (LD), **characterized in that** the second switch comprises a transistor (20₂) controlled in linear mode during a delay (Dpc) of predetermined duration and the device comprises a control circuit (21) provided with a current control loop (22, 212, 213, 214) for controlling the transistor (20₂) of the second switch in linear mode, said electrical current (I) able to flow between the electrical energy storage unit (BAT) and the load (LD) is controlled by a setpoint (CG₂, Cs) supplied at the input to the control loop (22, 212, 213, 214).

2. Device according to Claim 1, **characterized in that** the first switch comprises a transistor (20₁) controlled in switching mode, referred to as all-or-nothing switching mode.

3. Device according to Claim 1, **characterized in that** the second switch comprises a plurality (n) of transistors (IC1, IC2, ... ICn) connected in parallel, each of the transistors being controlled in linear mode during the delay of predetermined duration (Dpc).

4. Device according to Claim 3, **characterized in that** it comprises a control circuit provided with a current control loop (IC1, IC2, ... ICn) for controlling, in linear mode, at least one transistor of said plurality of parallel-connected transistors of the second switch.

5. Device according to Claim 4, **characterized in that** the electrical current able to flow between the electrical energy storage unit (BAT) and the load (LD) is controlled by a setpoint (Cs) supplied at the input to the current control loop.

6. Device according to Claim 1 or 3, **characterized in that** the first switch comprises a plurality (n) of transistors connected in parallel, each of the transistors being controlled in switching mode, referred to as all-or-nothing switching mode.

7. Device according to any one of Claims 1 to 6, **characterized in that** the one or more transistors are of MOSFET type.

8. On-board electrical network in a vehicle, **characterized in that** it comprises a load connection/disconnection device according to any one of Claims 1 to 7, the device being fitted to an electrical energy storage unit of the vehicle.
